# EUROPÄISCHE PATENTSCHRIFT

(11) **EP 0 961 074 B1**
(45) Veröffentlichungstag und Bekanntmachung des Hinweises auf die Patenterteilung: **11.04.2007**
(21) Anmeldenummer: 99110040.5
(22) Anmeldetag: 21.05.1999
(51) Int. Cl.: F21V 1/04

(54) **Beleuchtungseinrichtung für Fahrzeuge**
Vehicle headlamp assembly
Dispositif d' éclairage pour véhicule

(30) Priorität: 29.05.1998 DE 19824053
(43) Veröffentlichungstag der Anmeldung: 01.12.1999
(73) Patentinhaber: Hella KGaA Hueck & Co., 59552 Lippstadt (DE)
(72) Erfinder: Mügge, Martin, 59590 Geseke (DE); Seiger, Ralf, 59557 Lippstadt (DE)

(56) Entgegenhaltungen:
- DE-A- 4 124 374
- US-A- 5 136 482
- US-A- 5 353 204
- US-A- 5 386 348

## Beschreibung

Die Erfindung betrifft eine Beleuchtungseinrichtung für Fahrzeuge mit einem Gehäuse, mit einer das Gehäuse abschließenden lichtdurchlässigen Abschlußscheibe, mit mindestens einem im Gehäuse angeordneten Reflektor, mit einer dem Reflektor zugeordneten Lichtquelle, mit einem zwischen Lichtquelle und Abschlußscheibe angeordneten Abdeckschirm und einem den Reflektor umgebenden rahmenartigen Abdeckteil, wobei der Abdeckschirm eine Zierkappe für die Lichtquelle ist.

Eine solche Beleuchtungseinrichtung für Fahrzeuge ist aus der EP 0 646 495 A1 bekannt. Als Beleuchtungseinrichtung dient ein Scheinwerfer für Kraftfahrzeuge mit zwei Reflektoren. Beide Reflektoren sind in einem topfförmigen Gehäuse angeordnet und gemeinsam durch eine lichtdurchlässige Abschlußscheibe abgedeckt. Die Abschlußscheibe ist mit ihrem äußeren umlaufenden Rand auf den äußeren Rand des topfförmigen Gehäuses aufgesetzt. Zwischen den Reflektoren und der Abschlußscheibe ist ein die Reflektoren umgebendes Abdeckteil angeordnet. Das Abdeckteil ist aus Kunststoff hergestellt und an der Abschlußscheibe gehaltert. Bei einer Abschlußscheibe, welche zumindest optikfreie Bereiche aufweist, schirmt das Abdeckteil das Innere des topfförmigen Gehäuses gegen Blicke von außen ab. Beiden Reflektoren ist jeweils eine Lichtquelle zugeordnet, welche von Glühlampen gebildet sind. Die Glühlampen sind in eine in den Scheitelbereich der Reflektoren eingebrachte Aufnahmeöffnung eingesetzt. Zwischen den Lichtquellen und der Abschlußscheibe sind haubenartige Abdeckschirme angeordnet. Die Abdeckschirme können als Zierkappen dienen und sind über einen langen Tragarm mit dem Rand der Aufnahmeöffnung der Reflektoren verbunden.

Hierbei ist es nachteilig, daß bei einer unsachgemäßen Montage der Abdeckschirme die Reflexionsfläche der Reflektoren beschädigt werden kann und wegen der Befestigung der Abdeckschirme am Reflektor die Reflexionsfläche und somit die Lichtausbeute des Reflektors reduziert ist.

Aufgabe der Erfindung ist es, die im Oberbegriff des Anspruchs 1 beschriebene Beleuchtungseinrichtung für Fahrzeuge derart zu gestalten, daß der Abdeckschirm einfach und leicht montierbar ist, ohne daß die Gefahr einer Beschädigung der Reflexionsfläche des Reflektors besteht und wegen der Halterung des Abdeckschirms keine Verkleinerung der Reflexionsfläche des Reflektors gegeben ist. Diese Aufgabe wird nach der Erfindung dadurch gelöst, daß das rahmenartige Abdeckteil zusätzlich der Halter für den Abdeckschirm ist. Das den Abdeckschirm halternde Abdeckteil ist entweder an dem äußeren Rand des Gehäuses oder der Abschlußscheibe sicher festsetzbar. Da der Reflektor keine Anbindungsgeometrie zur Befestigung des Abdeckschirms aufweist, ist ein wirksamer Verlust der Reflexionsfläche vermeidbar. Außerdem muß der Werkstoff des Abdeckschirms nicht an den des Reflektors angepaßt sein. Ein an dem Reflektor befestigtes verzinktes Abschirmteil würde bei einer Aluminiumfläche des Reflektors zur Kontaktkorrosion führen.

Weiterhin ist es vorteilhaft, wenn der Abdeckschirm über ein seitliches Tragelement mit der oberen Innenseite des rahmenartigen Abdeckteils verbunden ist. Dadurch ist zumindest ein Abschnitt des Tragelementes bei einem Blick schräg von oben durch das Abdeckteil selbst abgeschirmt.

Bei einer besonders vorteilhaften Weiterbildung der Erfindung ist das rahmenartige Abdeckteil zusammen mit dem Abdeckschirm ein einstückiges Bauteil. Das Bauteil ist kostengünstig herstellbar, wenn es im Spritzgußverfahren aus Kunststoff hergestellt ist.

Der Abdeckschirm und das den Abdeckschirm tragende Abdeckteil sind verwindungssteif ausgeführt, wenn der Abdeckschirm haubenartig und das Tragelement rinnenartig ausgebildet ist, wobei die Haube und die Rinne zum Reflektor hin geöffnet sind, und wenn der Abdeckschirm bei einem doppelwandig ausgeführten Abdeckteil an die innere Wandung des rahmenartigen Abdeckteils angeformt ist. Dadurch ist das Abdeckteil zusammen mit dem Abdeckschirm ohne zusätzliche verstellbare Werkzeugteile im Spritzgießverfahren aus Kunststoff herstellbar.

Der Scheinwerfer weist einen harmonischen Gesamteindruck auf, wenn der Abdeckschirm und das rahmenartige Abdeckteil auf der der Abschlußscheibe zugewandten Seite dieselbe farbige Oberfläche aufweist. Die farbige Oberfläche kann von einer hochglänzenden, silberfarbigen Schicht gebildet sein.

Bei einer Beleuchtungseinrichtung mit einer Blinkleuchte ist es vorteilhaft, wenn als Abdeckschirm für die Blinkleuchte eine Zierkappe dient, die einer als Lichtquelle dienenden Lampe mit einem gelben Glaskolben zugeordnet ist. Hierbei dient der Abdeckschirm ausschließlich zur Abdeckung der gelben Lampe.

Bei einer Beleuchtungseinrichtung mit einem Scheinwerferreflektor ist es vorteilhaft, wenn der Abdeckschirm eine Zierkappe für die Lichtquelle des Scheinwerfers ist. Eine am Reflektor gehalterte Strahlenblende weisen Scheinwerfer mit Abblendlicht auf, während Scheinwerfer ohne Strahlenblende für Ferniicht dienen.

Ein Ausführungsbeispiel nach der Erfindung ist in der Zeichnung dargestellt, und zwar zeigen
Figur 1 in einer Vorderansicht einen Abschnitt eines Scheinwerfers mit einem Reflektor für Abblendlicht und einem Reflektor für Blinklicht;
Figur 2 einen Schnitt nach der Linie A-A in Figur 1 durch den Scheinwerfer für Abblendlicht und die Blinkleuchte und

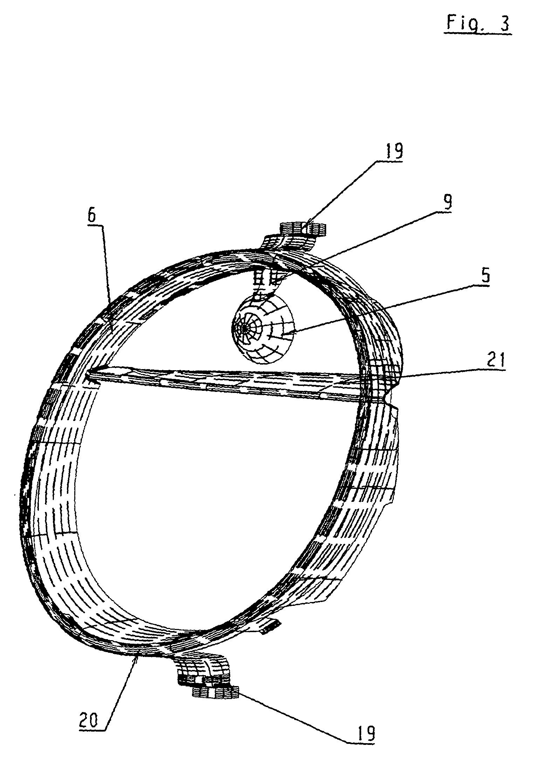

Figur 3 eine perspektivische Ansicht eines rahmenartigen Abdeckteils, welches im Inneren des Scheinwerfers angeordnet ist.

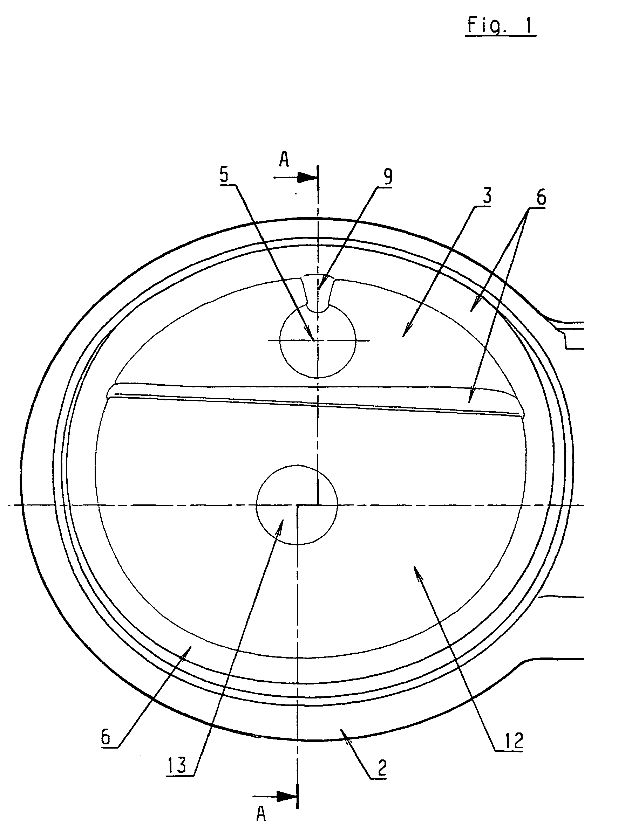

Der Scheinwerfer weist ein aus Kunststoff bestehendes, topfförmiges Gehäuse (1) auf, dessen vordere Öffnung durch eine aus Kunststoff bestehende, lichtdurchlässige Abschlußscheibe (2) verschlossen ist. Die Abschlußscheibe (2) ist mit ihrem äußeren umlaufenden Rand in ein Aufnahmebett (14) des äußeren Randes des topfförmigen Gehäuses (1) eingesetzt. Die Abschlußscheibe (2) ist durch einen in das Aufnahmebett (14) eingebrachten Klebstoff mit dem Gehäuse (1) dicht verbunden. Der in Figur 1 dargestellte Abschnitt des Scheinwerfers ist kreisrund gestaltet und weist im unteren Bereich einen Reflektor (12) für Abblendlicht und in einem oberen Bereich einen Reflektor (3) für Blinklicht auf Die Reflektoren sind schalenförmig ausgeführt und verlaufen mit den sich benachbarten Rändern in einem äquidistanten Abstand zueinander. Die Reflektoren (3, 12) weisen in ihrem Scheitelbereich eine Aufnahmeöffnung (15 bzw. 16) auf. In die Aufnahmeöffnung (15) ist eine von einer Lampe gebildete Lichtquelle (4) mit der Fassung (17) eingesetzt, während in der Aufnahmeöffnung (16) eine als Lichtquelle (18) dienende Lampe angeordnet ist. Im Inneren des Scheinwerfers ist zwischen den Reflektoren (3, 12) und der Abschlußscheibe (2) ein rahmenartiges Abdeckteil (6) angeordnet. Das rahmenartige Abdeckteil ist aus Kunststoff hergestellt und ist mit Haltefahnen (19) am Aufnahmebett (14) des Gehäuses (1) festgesetzt. Das rahmenartige Abdeckteil (6) weist einen beide Reflektoren (3, 12) umgebenden doppelwandigen Ringabschnitt (20) und einen zwischen beiden Reflektoren verlaufenden Steg (21) auf.

Die als Lichtquelle (4) dienende Lampe weist einen gelben Glaskolben (11) auf. Zwischen der Lichtquelle und der Abschlußscheibe (2) ist ein haubenartiger Abdeckschirm (5) angeordnet, der über ein rinnenförmiges Tragelement (9) an der oberen inneren Seitenwand des doppelwandigen Ringabschnitts (20) des Abdeckteils (6) angeformt ist. Die der Abschlußscheibe (2) zugewandte Oberfläche (7) des Abdeckschirms (5) und des Abdeckteils (6) ist und die Oberfläche (8) der Reflektoren (3 und 12) mit einer hochglänzenden, silberfarbigen Schicht versehen.

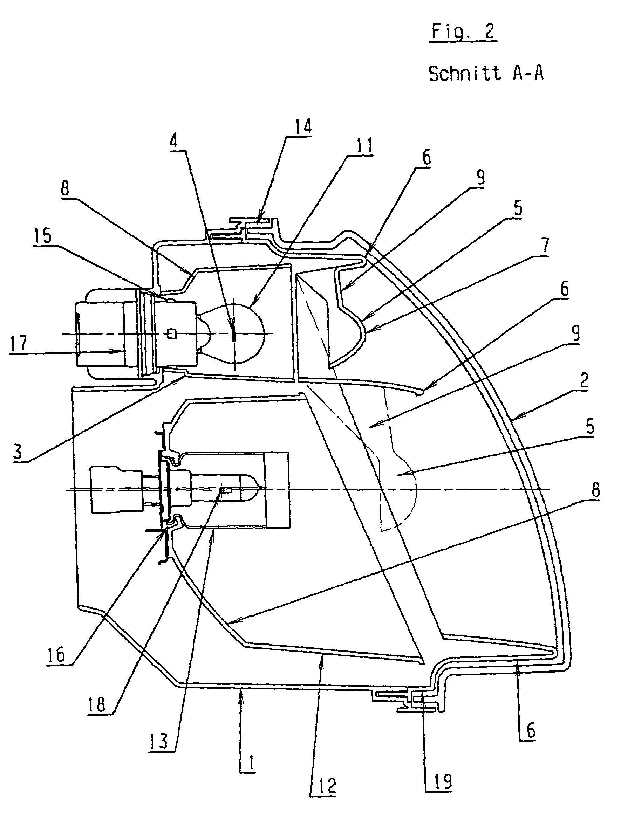

In Figur 2 ist zwischen der Lichtquelle (18) für Abblendlicht und der Abschlußscheibe (2) ein Abdeckschirm (5) strichpunktiert dargestellt. Der Abdeckschirm (5) ist mit seinem Tragelement (9) an eine Seitenfläche des Stegs (21) des Abdeckteils (6) angeformt. Zwischen der Lichtquelle (18) und dem Abdeckschirm (5) ist eine Strahlenblende (13) angeordnet, welche direkt aus der Lichtquelle (18) austretende und zum vorderen Reflektorrand hin gerichtete Lichtstrahlen abschirmt. Die Strahlenblende (13) ist über Tragarme am Rand der Aufnahmeöffnung (16) am Reflektor (12) befestigt. Der dem Reflektor (3) und dem Reflektor (12) zugeordnete Abdeckschirm (5) dient als Zierkappe.

Die Beleuchtungseinrichtung für Fahrzeuge kann auch von einer Heckleuchte für Kraftfahrzeuge gebildet sein.

### Bezugszeichenliste

### Beleuchtungseinrichtung für Fahrzeuge

- 1: Gehäuse
- 2: Abschlußscheibe
- 3: Reflektor
- 4: Lichtquelle
- 5: Abdeckschirm
- 6: Abdeckteil
- 7: Oberfläche
- 8: Oberfläche
- 9: Tragelement
- 10: innere Wandung
- 11: Glaskolben
- 12: Reflektor
- 13: Strahlenblende
- 14: Aufnahmebett
- 15: Aufnahmeöffnung
- 16: Aufnahmeöffnung
- 17: Fassung
- 18: Lichtquelle
- 19: Haltefahnen
- 20: Ringabschnitt
- 21: Steg

## Patentansprüche

1. Beleuchtungseinrichtung für Fahrzeuge mit einem Gehäuse (1), mit einer das Gehäuse (1) abschließenden lichtdurchlässigen Abschlußscheibe (2), mit mindestens einem im Gehäuse (1) angeordneten Reflektor (3), mit einer dem Reflektor (3) zugeordneten Lichtquelle (4, 18), mit einem zwischen Lichtquelle (4) und Abschlußscheibe (2) angeordneten Abdeckschirm (5) und einem den Reflektor(3) umgebenden rahmenartigen Abdeckteil (6), *wobei der Abdeckschirm (5) eine Zierkappe für die Lichtquelle (4) ist,* **dadurch gekennzeichnet, daß** das rahmenartige Abdeckteil (6) zusätzlich der Halter für den Abdeckschirm (5) ist.

2. Beleuchtungseinrichtung nach Anspruch 1, **dadurch gekennzeichnet, daß** der Abdeckschirm (5) in der Anbaulage des Scheinwerfers mit der oberen Innenseite des rahmenartigen Abdeckteils (6) verbunden ist.

3. Beleuchtungseinrichtung nach Anspruch 1 oder 2, **dadurch gekennzeichnet, daß** der Abdeckschirm (5) über ein seitliches Tragelement (9) mit dem Abdeckteil (6) verbunden ist.

4. Beleuchtungseinrichtung nach einem der Ansprüche 1 bis 3, **dadurch gekennzeichnet, daß** das rahmenartige Abdeckteil (6) zusammen mit dem Abdeckschirm (5) ein einstückiges Bauteil ist.

5. Beleuchtungseinrichtung nach Anspruch 3, **dadurch gekennzeichnet, daß** der Abdeckschirm (5) haubenartig und das Tragelement (9) rinnenartig ausgebildet ist, wobei die Haube und die Rinne zum Reflektor (3) hin geöffnet sind.

6. Beleuchtungseinrichtung nach Anspruch 5, **dadurch gekennzeichnet, daß** der Abdeckschirm (5) bei einem aus Kunststoff bestehenden und doppelwandig ausgeführten Abdeckteil (6) an die innere Wandung (10) des rahmenartigen Abdeckteils (6) angeformt ist.

7. Beleuchtungseinrichtung nach einem der Ansprüche 1 bis 6, **dadurch gekennzeichnet, daß** der Abdeckschirm (5) und das rahmenartige Abdeckteil (6) auf der der Abschlußscheibe (2) zugewandten Seite dieselbe farbige Oberfläche (7) aufweiset.

8. Beleuchtungseinrichtung nach einem der Ansprüche 1 bis 7, **dadurch gekennzeichnet, daß** der Abdeckschirm (5) eine Zierkappe für die Lichtquelle (4) einer Blinkleuchte ist, bei der als Lichtquelle (4) eine Lampe mit einem gelben Glaskolben (11) dient.

9. Beleuchtungseinrichtung nach einem der Ansprüche 1 bis 7, **dadurch gekennzeichnet, daß** der Abdeckschirm (5) eine Zierkappe für eine Lichtquelle (4) eines Scheinwerfers ist.

## Claims

1. Lighting equipment for motor vehicles in a housing (1), with a transparent lens (2) covering the housing (1), with at least one reflector (3) located in the housing (1), with a light source (4, 18) allocated to the reflector (3), with a cover screen (5) placed between the light source (4) and the cover lens (2), and a frame-like cover (6) circumscribing the reflector (3), *where the cover screen (5) is a trim cap for the light source (4),* wherein the frame-like cover (6) also holds the cover screen (5).

2. Lighting equipment as in claim 1, wherein the cover screen (5) is attached to the top inner side of the frame-like cover (6) when the headlamp is installed at its mounting position.

3. Lighting equipment as in claims 1 or 2, wherein the cover screen (5) is attached to the cover (6) by means of a lateral supporting element (9).

4. Lighting equipment as in one of claims 1 to 3, wherein the frame-like cover (6) and the cover screen (5) make up a single-part component.

5. Lighting equipment as in claim 3, wherein the cover screen (5) is designed as a hood and the holding element (9) is designed as a groove, where the hood and the groove open up towards the reflector (3).

6. Lighting equipment as in claim 5, wherein the cover screen (5) is molded to the inner wall (10) of the frame-like cover (6) and the covering element (6) is double-walled and made of plastic.

7. Lighting equipment as in one of claims 1 to 6, wherein the cover screen (5) and the frame-like cover (6) have the same colored surface (7) on the side facing the cover lens (2).

8. Lighting equipment as in one of claims 1 to 7, wherein the cover screen (5) is a trim cap of the light source (4) of a direction indicator having a lamp with a yellow glass bulb (11) as its light source (4).

9. Lighting equipment as in one of claims 1 to 7, wherein the cover screen (5) is the trim cap of a light source (4) of a headlamp.

## Revendications

1. Dispositif d'éclairage pour véhicules avec un boîtier (1), avec une glace transparente (2) obturant le boîtier, avec au moins réflecteur (3) disposé dans le boîtier (1), avec une source lumineuse (4, 18) affectée au réflecteur (3), avec un écran de recouvrement (5) disposé entre la source lumineuse (4) et la glace (2) et une pièce de recouvrement en forme de cadre (6) entourant le réflecteur (3), l'écran de recouvrement (5) étant un capuchon décoratif pour la source lumineuse (4), **caractérisé en ce que** la pièce de recouvrement en forme de cadre (6) constitue en plus le support pour l'écran de recouvrement (5).

2. Dispositif d'éclairage selon la revendication 1, **caractérisé en ce que** l'écran de recouvrement (5) est rattaché à la face intérieure supérieure de la pièce de recouvrement en forme de cadre (6) à l'état de montage du projecteur.

3. Dispositif d'éclairage selon la revendication 1 ou 2, **caractérisé en ce que** l'écran de recouvrement (5) est rattaché à la pièce de recouvrement (6) par un élément porteur latéral (9).

4. Dispositif d'éclairage selon l'une quelconque des revendications 1 à 3, **caractérisé en ce que** la pièce de recouvrement en forme de cadre (6) constitue un composant monobloc avec l'écran de recouvrement (5).

5. Dispositif d'éclairage selon la revendication 3, **caractérisé en ce que** l'écran de recouvrement (5) est conçu en forme de capot et l'élément porteur (9) en forme de rigole, le capot et la rigole étant ouverts en direction du réflecteur (3).

6. Dispositif d'éclairage selon la revendication 5, **caractérisé en ce que** l'élément de recouvrement (5) est, dans le cas d'une pièce de recouvrement (6) en plastique et à double paroi, formé sur la paroi intérieure (10) de la pièce de recouvrement en forme de cadre (6).

7. Dispositif d'éclairage selon l'une quelconque des revendications 1 à 6, **caractérisé en ce que** l'écran de recouvrement (5) et la pièce de recouvrement en forme de cadre (6) sur le côté tourné vers la glace (2) présentent la même couleur de surface.

8. Dispositif d'éclairage selon l'une quelconque des revendications 1 à 7, **caractérisé en ce que** l'écran de recouvrement (5) est un capuchon décoratif pour la source lumineuse (4) d'un feu clignotant, sur lequel une lampe avec une ampoule jaune (11) sert de source lumineuse (4).

9. Dispositif d'éclairage selon l'une quelconque des revendications 1 à 7, **caractérisé en ce que** l'écran de recouvrement (5) est un capuchon décoratif pour une source lumineuse (4) d'un projecteur.
